(19) Europäisches Patentamt
European Patent Office
Office européen des brevets

(11) **EP 1 858 736 B1**

(12) **EUROPÄISCHE PATENTSCHRIFT**

(45) Veröffentlichungstag und Bekanntmachung des Hinweises auf die Patenterteilung:
**03.08.2011 Patentblatt 2011/31**

(21) Anmeldenummer: **06725085.2**

(22) Anmeldetag: **15.03.2006**

(51) Int Cl.:
*B60T 8/1755* (2006.01)    *B60T 8/172* (2006.01)
*B60W 30/04* (2006.01)    *B60W 40/12* (2006.01)
*B60G 17/016* (2006.01)    *G01G 19/08* (2006.01)

(86) Internationale Anmeldenummer:
**PCT/EP2006/060769**

(87) Internationale Veröffentlichungsnummer:
**WO 2006/097498 (21.09.2006 Gazette 2006/38)**

(54) **VERFAHREN UND FAHRDYNAMIKREGELSYSTEM ZUM STABILISIEREN EINES FAHRZEUGS**

METHOD AND VEHICLE DYNAMICS CONTROL SYSTEM FOR STABILISING A MOTOR VEHICLE

PROCEDE ET SYSTEME DE REGLAGE DE LA DYNAMIQUE DE CONDUITE PERMETTANT DE STABILISER UN VEHICULE

(84) Benannte Vertragsstaaten:
**DE FR**

(30) Priorität: **17.03.2005 DE 102005012857**
            **15.03.2006 DE 102006012246**

(43) Veröffentlichungstag der Anmeldung:
**28.11.2007 Patentblatt 2007/48**

(73) Patentinhaber: **Continental Teves AG & Co. oHG**
**60488 Frankfurt am Main (DE)**

(72) Erfinder:
- **KRÖBER, Jürgen**
**56333 Winningen (DE)**
- **HORN, Michael**
**61449 Steinbach (DE)**

- **ABEL, Mirja**
**60486 Frankfurt am Main (DE)**
- **REITH, Günther**
**65462 Ginsheim (DE)**

(74) Vertreter: **Graf, Ulrich**
**Continental Teves AG & Co.oHG**
**Guerickestrasse 7**
**60488 Frankfurt am Main (DE)**

(56) Entgegenhaltungen:
**EP-A- 1 382 948**      **WO-A-2005/039955**
**DE-A1- 10 144 699**    **DE-A1- 19 728 769**
**DE-A1- 19 827 881**    **DE-A1- 19 830 189**
**DE-A1- 19 837 380**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Stabilisieren eines Fahrzeugs, insbesondere zum Stabilisieren gegenüber Kippbewegungen.

Die Erfindung betrifft ferner ein zur Durchführung des Verfahrens geeignetes Fahrdynamikregelsystem.

Es ist bekannt, zur Erhöhung der Sicherheit von Fahrzeugen Fahrdynamikregelsysteme wie beispielsweise das bekannte ESP (ESP: Electronic Stability Program) einzusetzen, welche die Fahrstabilität eines Fahrzeugs durch Eingriffe in das Bremssystem, den Antriebsmotor oder in das Lenkungssystem erhöhen.

Ferner ist es bekannt, Kippstabilitätsregelungen in derartige Systeme zu integrieren, die in kritischen Fahrsituationen, etwa durch das gezielte Abbremsen eines Rades, die auf das Fahrzeug wirkenden Querkräfte reduzieren und so das Umkippen des Fahrzeugs verhindern. Solche Regelsysteme sind beispielsweise unter der Bezeichnung ARP (ARP: Active Rollover Protection) bekannt.

Es hat sich gezeigt, dass der Beladungszustand einen großen Einfluss auf das Fahrverhalten eines Fahrzeugs hat. Dies gilt insbesondere im Hinblick auf die Kippstabilität, die sich bei einer großen Zuladung erheblich verringert, wenn das Fahrzeug einen hohen Schwerpunkt aufweist, wie es beispielsweise bei Transportern oder SUVs (SUV: Sports Utility Vehicle) bzw. Geländewagen der Fall ist.

Aus diesem Grund tritt oftmals das Problem auf, dass Fahrdynamikregelsysteme - je nach ihrer Abstimmung auf einen bestimmten Beladungszustand - zu stark bzw. zu früh oder zu wenig bzw. zu spät in das Fahrverhalten eingreifen. Die Fahrdynamikregelung wird hierdurch entweder unkomfortabel oder sie gewährleistet die Fahrzeugsicherheit nicht in ausreichendem Maße.

Ein Verfahren bzw. eine Vorrichtung nach dem Oberbegriff von Anspruch 1 bzw. 19 ist aus der DE 198 30 189 A1 bekannt.

Es ist eine Aufgabe der vorliegenden Erfindung, eine möglichst komfortable und sichere Fahrdynamikregelung bei unterschiedlichen Beladungszuständen des Fahrzeugs zu ermöglichen.

Erfindungsgemäß wird diese Aufgabe durch ein Verfahren mit den Merkmalen des Patentanspruchs 1 sowie durch eine Vorrichtung mit den Merkmalen des Patentanspruchs 19 gelöst.

Demgemäß wird ein Verfahren zum Stabilisieren eines Fahrzeugs, insbesondere zum Stabilisieren gegenüber Kippbewegungen, bereitgestellt, bei dem anhand eines Regelverfahrens Stellgrößen zur Ansteuerung wenigstens eines Aktuators ermittelt werden, mit dem das Fahrverhalten des Fahrzeugs beeinflusst werden kann. Es wird vorgeschlagen, dass das Regelverfahren in Abhängigkeit von einem Beladungszustand des Fahrzeugs durchgeführt wird, wobei der Beladungszustand des Fahrzeugs anhand einer Fahrzeugmasse, die aufgrund einer Kräftebilanz an das Fahrzeug angreifender Kräfte ermittelt wird, und/oder anhand einer charakteristischen Geschwindigkeit des Fahrzeugs bestimmt wird.

Zudem wird ein Fahrdynamikregelsystem zum Stabilisieren eines Fahrzeugs, insbesondere zum Stabilisieren gegenüber Kippbewegungen, bereitgestellt, das eine Regeleinheit umfasst, in der Stellgrößen zur Ansteuerung wenigstens eines Aktuators ermittelbar sind, mit dem das Fahrverhalten des Fahrzeugs beeinflussbar ist, bereitgestellt. Das Fahrdynamikregelsystem zeichnet sich dadurch aus, dass die Stellgrößen in Abhängigkeit von einem Beladungszustand des Fahrzeugs ermittelbar sind, wobei der Beladungszustand des Fahrzeugs anhand einer Fahrzeugmasse, die aufgrund einer Kräftebilanz an das Fahrzeug angreifender Kräfte ermittelbar ist, und/oder anhand einer charakteristischen Geschwindigkeit des Fahrzeugs bestimmbar ist.

Die Erfindung eignet sich insbesondere für einen Einsatz im Zusammenhang mit einem Verfahren zur Stabilisierung eines Fahrzeugs gegenüber Kippbewegungen. Gleichfalls kann die Erfindung jedoch auch mit anderen Regelverfahren eingesetzt werden, in denen Stellgrößen zur Ansteuerung von stabilisierend in das Fahrverhalten des Fahrzeugs eingreifenden Aktuatoren ermittelt werden.

Der Begriff Beladungszustand umfasst im Rahmen der Erfindung sowohl die Höhe der Zuladung als auch die Verteilung einer Ladung innerhalb des Fahrzeugs. Die Höhe der Zuladung wird dabei vorteilhaft anhand der Fahrzeugmasse ermittelt und die Verteilung der Ladung, die beispielsweise Einfluss auf den Fahrzeugschwerpunkt hat, wird anhand der charakteristischen Geschwindigkeit des Fahrzeugs ermöglicht. Dabei hat sich gezeigt, dass sich die charakteristische Geschwindigkeit des Fahrzeugs bei einer Erhöhung der Zuladung und/oder bei einer Verschiebung des Fahrzeugschwerpunktes nach oben verringert, so dass bei einer Verringerung des Wertes der charakteristischen Geschwindigkeit auf eine verringerte Kippstabilität des Fahrzeugs geschlossen werden kann.

Erfindungsgemäß ist es vorgesehen, dass anhand wenigstens eines vorgegebenen Kriteriums überprüft wird, ob eine erste vorgegebene Fahrsituation vorliegt, und dass die Kräftebilanz ausgewertet wird, wenn festgestellt wird, dass die erste vorgegebene Fahrsituation vorliegt.

Darüber hinaus zeichnet sich das erfindungsgemäße Verfahren und erfindungsgemäße Fahrdynamikregelsystem dadurch aus, dass eine Anzahl von Lernzyklen gezählt wird, wobei ein Lernzyklus einer zusammenhängenden Zeitdauer entspricht, in der die vorgegebene Fahrsituation vorliegt.

Erfindungsgemäß ist vorgesehen, dass das Kriterium zur Überprüfung, ob die erste vorgegebene Fahrsituation vorliegt, in Abhängigkeit von der Anzahl der Lernzyklen verändert wird.

Auf diese Weise wird eine zuverlässige Bestimmung der Fahrzeugmasse gewährleistet. Dabei hat sich gezeigt, dass eine besonders genaue Bestimmung der Fahrzeugmasse bei Beschleunigungsvorgängen möglich ist.

Eine besonders vorteilhafte Ausgestaltung des erfindungsgemäßen Verfahrens und des erfindungsgemäßen Fahrdynamikregelsystems sieht daher vor, dass die erste vorgegebene Fahrsituation vorliegt, wenn die Fahrzeugbeschleunigung größer als ein Beschleunigungsschwellenwert ist.

Weiterhin zeichnet sich eine vorteilhafte Ausgestaltung des erfindungsgemäßen Verfahrens und des erfindungsgemäßen Fahrdynamikregelsystems dadurch aus, dass die erste vorgegebene Fahrsituation vorliegt, wenn eine Gierrate des Fahrzeugs betraglich kleiner als ein Gierratenschwellenwert ist.

Hierdurch wird sichergestellt, dass nur solche Fahrsituationen berücksichtigt werden, in denen das Fahrzeug keine zu starke Gierbewegung ausführt, welche die Genauigkeit der auf der Grundlage der Kräftebilanz vorgenommenen Massenbestimmung beeinträchtigen würde.

Darüber hinaus hat sich in Fahrversuchen herausgestellt, dass eine besonders genaue Bestimmung der Fahrzeugmasse anhand der Kräftebilanz möglich ist, wenn der Gradient eines Motormoments eines Antriebsmotors des Fahrzeugs nicht zu groß ist.

Daher ist es in einer gleichfalls vorteilhaften Ausgestaltung des erfindungsgemäßen Verfahrens und des erfindungsgemäßen Fahrdynamikregelsystems vorgesehen, dass die erste vorgegebene Fahrsituation vorliegt, wenn ein Gradient eines Motormoments betraglich kleiner als ein Motormomentgradientenschwellenwert ist.

Eine bevorzugte Weiterbildung des erfindungsgemäßen Verfahrens und des erfindungsgemäßen Fahrdynamikregelsystems ist dadurch gekennzeichnet, dass die Fahrzeugmasse anhand eines Lernalgorithmus ermittelt wird, wobei in verschiedenen Zeitpunkten jeweils ein momentaner Schätzwert für die Fahrzeugmasse ermittelt wird, und die Fahrzeugmasse anhand einer Mittelwertbildung aus den momentanen Schätzwerten ermittelt wird.

Hierdurch wird die Zuverlässigkeit der Massenbestimmung weiter erhöht.

Zudem sieht eine vorteilhafte Ausführungsform des erfindungsgemäßen Verfahrens und des erfindungsgemäßen Fahrdynamikregelsystems vor, dass die Fahrzeugmasse als ein gewichteter Mittelwert bestimmt wird, wobei ein in einem Zeitpunkt ermittelter momentaner Schätzwert mit einem ersten Gewicht in den Mittelwert eingeht und ein zuvor bestimmter Wert der Fahrzeugmasse mit einem zweiten Gewicht in den Mittelwert eingeht.

Vorzugsweise ist das zweite Gewicht größer als das erste Gewicht.

Insbesondere beinhaltet eine vorteilhafte Ausführungsform des erfindungsgemäßen Verfahrens und des erfindungsgemäßen Fahrdynamikregelsystems, dass das Kriterium mit steigender Anzahl von Lernzyklen enger gefasst wird.

Aufgrund von enger gefassten Kriterien zur Ermittlung der Fahrsituationen, in denen die Fahrzeugmasse bestimmt wird, werden mit zunehmender Anzahl der Lernzyklen nur noch Fahrsituationen berücksichtigt, in denen eine besonders genaue Massenbestimmung möglich ist. Auf diese Weise erhöht sich die Genauigkeit des ermittelten Massenwertes mit der Anzahl der Lernzyklen in hohem Maße.

Eine besonders zweckmäßige Ausgestaltung des erfindungsgemäßen Verfahrens und des erfindungsgemäßen Fahrdynamikregelsystems ist dadurch gekennzeichnet, dass der Beschleunigungsschwellenwert mit steigender Anzahl von Lernzyklen vergrößert wird.

Weiterhin ist es bei einer gleichfalls zweckmäßigen Ausgestaltung des erfindungsgemäßen Verfahrens und des erfindungsgemäßen Fahrdynamikregelsystems vorgesehen, dass der Gierratenschwellenwert mit steigender Anzahl von Lernzyklen verringert wird.

Zudem beinhaltet eine vorteilhafte Ausgestaltung des erfindungsgemäßen Verfahrens und des erfindungsgemäßen Fahrdynamikregelsystems, dass der Motormomentgradientenschwellenwert mit steigender Anzahl von Lernzyklen verringert wird.

Darüber hinaus ist es in einer besonders vorteilhafte Ausführungsform des erfindungsgemäßen Verfahrens und des erfindungsgemäßen Fahrdynamikregelsystems vorgesehen, dass ein Verhältnis zwischen dem ersten Gewicht und dem zweiten Gewicht in Abhängigkeit von der Anzahl der Lernzyklen ermittelt wird.

Auf diese Weise kann etwa erreicht werden, dass ein Wert der Fahrzeugmasse, der in einem späten Lernzyklus unter Zugrundelegungen engerer Kriterien für die Bestimmung der Lernsituation bestimmt worden ist, mit einem größeren Gewicht in den Mittelwert eingeht.

Weiterhin sieht eine bevorzugte Ausführungsform des erfindungsgemäßen Verfahrens und des erfindungsgemäßen Fahrdynamikregelsystems vor, dass überprüft wird, ob eine zweite vorgegebene Fahrsituation vorliegt, und dass die charakteristische Geschwindigkeit ermittelt wird, wenn festgestellt wird, dass die zweite vorgegebene Fahrsituation vorliegt. Zweckmäßigerweise ist es dabei vorgesehen, dass es sich bei der zweiten Fahrsituation um eine Kurvenfahrt handelt.

Eine vorteilhafte Ausgestaltung des erfindungsgemäßen Verfahrens und des erfindungsgemäßen Fahrdynamikregelsystems sieht vor, dass das Regelverfahren durchgeführt wird, wenn der Wert einer Fahrzustandsgröße des Fahrzeugs betraglich größer ist als ein Aktivierungsschwellenwert, wobei der Aktivierungsschwellenwert in Abhängigkeit von dem Beladungszustand des Fahrzeugs ermittelt wird.

Es ist besonders vorteilhaft, Regeleingriffe bei einer erhöhten Zuladung des Fahrzeugs früher vorzunehmen, da die Kippstabilität des Fahrzeugs aufgrund einer höheren Zuladung in der Regel geringer ist. Eine bevorzugte Ausgestaltung des erfindungsgemäßen Verfahrens und des erfindungsgemäßen Fahrdynamikregelsystems ist daher dadurch gekennzeichnet, dass der Aktivierungsschwellenwert mit steigender Fahrzeugmasse verringert wird.

Bei einer erhöhten Zuladung und/oder bei einer Verschiebung des Fahrzeugschwerpunktes nach oben neigt das Fahrzeug zu einem stärker untersteuernden Verhalten, das sich in einer Verringerung der charakteristischen Geschwindigkeit bemerkbar macht.

Da sich sowohl eine erhöhte Zuladung als auch eine Verschiebung des Fahrzeugschwerpunkts nach oben ungünstig auf die Kippstabilität des Fahrzeugs auswirken, ist es bei einer ebenfalls bevorzugten Ausgestaltung des erfindungsgemäßen Verfahrens und des erfindungsgemäßen Fahrdynamikregelsystems vorgesehen, dass der Aktivierungsschwellenwert mit sich verringernder charakteristischer Geschwindigkeit verringert wird.

Eine Kipptendenz des Fahrzeugs kann besonders zuverlässig anhand der Querbeschleunigung erkannt werden. Daher beinhaltet eine bevorzugte Ausführungsform des erfindungsgemäßen Verfahrens und des erfindungsgemäßen Fahrdynamikregelsystems, dass es sich bei der Fahrzustandsgröße um eine Querbeschleunigung des Fahrzeugs handelt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele βetrachtet wird ein Fahrzeug, das über einen Antriebsmotor verfügt, der über einen Triebstrang mit den angetriebenen Rädern des Fahrzeugs verbunden ist. Bei der dargestellten Ausführungsform handelt es sich dabei um die Hinterräder des Fahrzeugs; es kann jedoch gleichfalls vorgesehen sein, dass es sich um ein Fahrzeug mit Vorderrad- oder Allradantrieb handelt. In den Triebstrang ist ein Getriebe eingesetzt, in dem anhand einer Gangstufe ein Übersetzungsverhältnis zwischen einer Motorausgangswelle und einer Radantriebswelle eingestellt werden kann. Das Getriebe kann als Handschaltgetriebe, automatisches oder automatisiertes Getriebe ausgeführt sein.

Ferner verfügt das Fahrzeug über eine Bremsanlage, die beispielsweise als hydraulische Bremsanlage ausgeführt ist. Neben der Betätigung durch den Fahrer erlaubt die Bremsanlage einen Druckaufbau durch eine elektrohydraulische Druckeinheit. Der aufgebaute Bremsdruck wird an Radbremsen übertragen, wobei es vorgesehen ist, dass mithilfe von Ventilen innerhalb der Druckeinheit unterschiedliche Bremsdrücke in verschiedenen Radbremsen einstellbar sind.

Zur Durchführung einer Fahrdynamikregelung und insbesondere zur Durchführung einer Kippstabilisierung verfügt das Fahrzeug über einen Fahrdynamikregler, in dem eine oder mehrere Stellgrößen zur Ansteuerung eines oder mehrerer Aktuatoren zur Beeinflussung des Fahrverhaltens des Fahrzeugs bestimmt werden. Bei der dargestellten Ausführungsform der Erfindung ist dabei eine Ansteuerung der Druckeinheit der Bremsanlage des Fahrzeugs sowie eine Ansteuerung des Antriebsmotors bzw. der Motorsteuerung vorgesehen. Durch die Eingriffe kann das Fahrzeug so abgebremst werden, dass hohe Querkräfte reduziert werden und damit die Fahrstabilität erhöht wird. Gleichfalls oder alternativ kann es jedoch auch vorgesehen sein, das mittels des Fahrdynamikreglers ein in den Lenkstrang des Fahrzeugs eingreifender Lenkungsaktuator angesteuert wird, um das Fahrzeug durch das Einstellen eines geeigneten Lenkwinkels zu stabilisieren.

Der Fahrdynamikregler verfügt über eine Regeleinheit zur Durchführung des Regelverfahrens zur Fahrdynamikregelung, in der die Stellgrößen S zur Ansteuerung der Aktuatoren in Abhängigkeit von fahrdynamischen Größen und von Betriebszustandsgrößen des Fahrzeugs ermittelt werden. Diese Größen werden von signalmäßig mit dem Fahrdynamikregler verbundenen Sensoren des Fahrzeugs gemessen bzw. aus gemessenen Größen, oder sie werden von einem oder mehreren Steuergeräten des Fahrzeugs bereitgestellt.

Die Sensorik zur Ermittlung der fahrdynamischen Größen umfasst üblicherweise einen Sensorcluster, der einen Längsbeschleunigungssensor, einen Querbeschleunigungssensor sowie einen Gierratensensor umfasst. Ein von dem Fahrer eingestellter Lenkwinkel an den lenkbaren Rädern des Fahrzeugs wird üblicherweise von einem Lenkwinkelsensor erfasst, dessen Signale an den Fahrdynamikregler übermittelt werden. Die Fahrzeuggeschwindigkeit sowie die Fahrzeugbeschleunigung werden üblicherweise anhand von Signalen von Raddrehzahlsensoren bestimmt, wobei die Bestimmung in der Regel innerhalb eines ABS (Anti-Blocking System) erfolgt, das in die Regeleinheit integriert ist. Ferner wird von einem Motorsteuergerät das aktuelle Motormoment des Antriebsmotors an den Fahrdynamikregler übermittelt.

Das Regelverfahren zur Kippstabilisierung wird vorzugsweise aufgrund der Erkennung einer Fahrsituation aktiviert, in der von einer erhöhten Kippgefahr des Fahrzeugs auszugehen ist. Vorzugsweise wird das Vorliegen einer derartigen Fahrsituation festgestellt, wenn der Betrag der Querbeschleunigung des Fahrzeugs einen vorgegebenen Aktivierungsschwellenwert überschreitet.

Im Rahmen der Erfindung ist es vorgesehen, das Regelverfahren in Abhängigkeit von dem Beladungszustand des Fahrzeugs durchzuführen. Vorzugsweise ist es dabei vorgesehen, dass der Aktivierungsschwellenwert in Abhängigkeit von dem Beladungszustand bestimmt wird.

Die Ermittlung des Beladungszustands erfolgt in einer Berechnungseinheit. In einer Ausführungsform der Erfindung übermittelt diese einen Wert m der Fahrzeugmasse und/oder einen Wert $v_{ch}$ der charakteristischen Geschwindigkeit des Fahrzeugs an die Regeleinheit, welche das Regelverfahren an diese Größen anpasst. Die Anpassung von Reglergrößen kann dabei beispielsweise anhand eines Kennlinienfeldes erfolgen, das zuvor in Fahrversuchen ermittelt worden ist. Vorzugsweise ist dabei in der Regeleinheit ein Kennlinienfeld gespeichert, das den Aktivierungsschwellenwertes für das Regelverfahren in Abhängigkeit von dem Wert der Fahrzeugmasse und/oder in Abhängigkeit von dem Wert der charakteristischen Geschwindigkeit angibt. Grundsätzlich ist es dabei vorgesehen, dass der Aktivierungsschwellenwert mit steigender Fahrzeugmasse und mit einer sich verringernden charakteristischen Geschwindigkeit verringert wird.

In alternativen Ausführungsformen der Erfindung kann es auch vorgesehen sein, dass innerhalb der Berechnungseinheit oder innerhalb der Regeleinheit eine Beladungszustandsgröße aus der Fahrzeugmasse und der charakteristischen Geschwindigkeit bestimmt und zur Beeinflussung des Regelverfahrens herangezogen wird.

Zur Ermittlung der Fahrzeugmasse sieht die Erfindung einen Lernalgorithmus vor. Der Algorithmus basiert auf der Auswertung verschiedener Fahrzeuggrößen, von denen die meisten innerhalb des Fahrdynamikreglers auch zur Durchführung des Regelverfahrens innerhalb der Regeleinheit verwendet werden.

Die Bestimmung der Fahrzeugmasse beginnt mit dem Starten des Fahrzeugs bzw. mit dem Starten der Fahrzeugelektronik. Dabei wird zunächst ein Startwert für die Fahrzeugmasse ermittelt. Vorzugsweise werden dabei für verschiedene Fahrzeugtypen unterschiedliche Startwerte vorgegeben, die insbesondere auch in Abhängigkeit von der bei Testfahrten ermittelten Kippstabilität des Fahrzeugs eines bestimmten Typs ausgewählt werden. Bei einem Fahrzeug, wie beispielsweise einem gewöhnlichen PKW, bei dem die Kippstabilität aufgrund eines relativ niedrigen Schwerpunktes höher ist, wird vorzugsweise das Leergewicht des Fahrzeugs als Startwert herangezogen. Bei Fahrzeugen mit einem höheren Schwerpunkt und somit geringerer Kippstabilität, wie beispielsweise SUVs bzw. Geländewagen oder Transportern, ist der Startwert größer als das Leergewicht des Fahrzeugs. Beispielsweise kann bei geringer Kippstabilität das zulässige Maximalgewicht des Fahrzeugs als Startwert verwendet werden.

Die dynamische Ermittlung der Fahrzeugmasse erfolgt auf der Grundlage einer Kräftebilanz der Längskräfte, die während eines Beschleunigungsvorgangs auf das Fahrzeug einwirken. Es gilt:

$$F_{Antrieb} = F_{Beschl} + F_{Steig} + F_{Roll} + F_{Luft} \qquad (1)$$

Dabei bezeichnet $F_{Antrieb}$ die von dem Antriebsmotor bereitgestellte Antriebskraft, $F_{Beschl}$ die Trägheitskraft des Fahrzeugs bzw. den so genannten Beschleunigungswiderstand, $F_{Steig}$ den Steigungswiderstand bei Fahrten auf einem Gefälle, $F_{Roll}$ den Rollwiderstand aufgrund der Rollreibung zwischen den Rädern und der Fahrbahn und $F_{Luft}$ den Luftwiderstand.

Im Einzelnen gilt für die Größen in Gleichung 1

$$F_{Antrieb} = \frac{M}{r_{dyn}} \cdot \eta \; ; \quad F_{Beschl} = m_{Fzg} \cdot a_{ABS} + \frac{4 \cdot J_{Rad} + J_{red}}{r_{dyn}^2} \cdot a_{ABS} \; ;$$

$$F_{Steig} = m_{Fzg} \cdot g \cdot \sin(\alpha) \; ; \quad F_{Roll} = f \cdot m_{Fzg} \cdot g \; ; \quad F_{Luft} = c_W \cdot A \cdot \rho \cdot \frac{v^2}{2}$$

mit folgender Bedeutung der enthaltenen Größen:

$m_{Fzg}$: Fahrzeugmasse
M: Drehmoment des Antriebsmotors
$\eta$: Faktor zur Berücksichtigung der Übersetzungsverhältnisse und des Wirkungsgrades des Getriebes
$a_{ABS}$: Aus den Radgeschwindigkeiten berechnete Fahrzeugbeschleunigung
$J_{Rad}$: Trägheitsmoment der Räder
$J_{red}$: Auf die Antriebsachse reduziertes Trägheitsmoment des Antriebsmotors, des Getriebes und des übrigen Triebstrangs
$r_{dyn}$: Dynamischer Radhalbmesser

α: Neigungswinkel der Fahrbahn
f: Rollwiderstandsbeiwert
g: Erdbeschleunigung
$c_w$: Luftwiderstandsbeiwert
A: Querschnittsfläche des Fahrzeugs
ρ: Luftdichte
v: Fahrzeuggeschwindigkeit

Der Steigungswiderstand wird bei der Erfindung vorzugsweise mithilfe des Längsbeschleunigungssensors ermittelt, wobei sich die Hangbeschleunigung des Fahrzeugs aufgrund eines vorliegenden Gefälles aus der Differenz zwischen der mittels des Sensors gemessenen Längsbeschleunigung und der anhand der aus den Radgeschwindigkeiten berechneten Beschleunigung ergibt, die der Änderungsrate der Fahrzeuggeschwindigkeit entspricht. Bei Vorwärtsfahrt des Fahrzeugs gilt $g \cdot \sin(\alpha) = a_{Sensor} - a_{ABS}$ und somit:

$$F_{Steig} = m_{Fzg} \cdot \left( a_{Sensor} - a_{ABS} \right) \qquad (2)$$

Für die Fahrzeugmasse gilt damit bei einem Beschleunigungsvorgang in Vorwärtsrichtung:

$$m_{Fzg} = \frac{\dfrac{M}{r_{dyn}} \cdot \eta - \dfrac{4 \cdot J_{Rad} + J_{red}}{r_{dyn}^2} \cdot a_{ABS} - c_W \cdot A \cdot \rho \cdot \dfrac{v^2}{2}}{f \cdot g + a_{Sensor}} \qquad (3)$$

Die Größen $J_{Rad}$, $c_w$, A, p, f und g sind konstante bzw. nahezu konstante Größen, die innerhalb der Berechnungseinheit 10 gespeichert sind. Der dynamische Radhalbmesser kann ebenfalls als konstanter Wert vorgegeben werden. Weiterhin werden Größen herangezogen, wie beispielsweise das Motormoment, die dem Fahrdynamikregler auch zur Durchführung des Regelverfahrens zugeführt werden, und es werden Größen, wie Fahrzeuggeschwindigkeit und Fahrzeugbeschleunigung $a_{ABS}$ verwendet, die innerhalb des Fahrdynamikreglers bestimmt werden.
Das Trägheitsmoment $J_{red}$ des Triebstrangs sowie der Faktor η hängen insbesondere von dem in dem Getriebe eingelegten Gang ab und werden fortlaufend in Abhängigkeit von dem gewählten Gang bestimmt, der beispielsweise mittels eines entsprechenden Sensors gemessen oder von einer Getriebesteuerung bereitgestellt werden kann. Darüber hinaus hängt der Faktor η von weiteren Betriebsparametern, insbesondere von der Betriebstemperatur des Triebstrangs ab. Daher ist es vorzugsweise vorgesehen, für jeden Gang des Getriebes einen Standardwert für den Faktor η vorzugeben, der in bestimmten Situationen modifiziert wird. Insbesondere erfolgt dabei bei geringer Betriebstemperatur eine Anpassung des Faktors an einen verringerten Wirkungsgrad des Triebstrangs, wobei die Betriebstemperatur beispielsweise mittels eines Temperatursensors erfasst oder auch unter Berücksichtigung der mittels eines Sensors gemessenen Außentemperatur anhand eines Fahrzeugmodells aus der Betriebsdauer seit dem Start des Fahrzeugs bestimmt werden kann.
Die dynamische Ermittlung der Fahrzeugmasse erfolgt dann in Fahrsituationen, die anhand vorgegebener Kriterien ermittelt werden, die im Folgenden auch als Lernbedingungen bezeichnet werden. Als besonders vorteilhaft haben sich dabei folgende Lernbedingungen erwiesen, von denen vorzugsweise alle oder einzelne erfüllt sein müssen, um die Fahrzeugmasse zu berechnen:

a) Es werden keine Regeleingriffe eines Fahrdynamikreglers, insbesondere keine Bremseneingriffe durchgeführt,
b) das Fahrpedal muss wenigstens um einen vorgegebenen Pedalweg eingetreten sein,
c) die Fahrzeuggeschwindigkeit liegt zwischen einem unteren Schwellenwert $v_{low}$ und einem oberen Schwellenwert $v_{high}$,
d) die Motordrehzahl liegt zwischen einem unteren und einem oberen Schwellenwert,
e) der Gradient der Fahrzeugbeschleunigung $a_{ABS}$ ist größer als ein vorgegebener Schwellenwert,
f) in dem Getriebe ist der zweite oder ein höherer Gang eingelegt,
g) es erfolgt kein Gangwechsel in dem Getriebe,
h) die Fahrzeugbeschleunigung $a_{ABS}$ ist größer als ein vorgegebener Beschleunigungsschwellenwert,
i) die Gierrate des Fahrzeugs ist kleiner als ein vorgegebener Gierratenschwellenwert und
j) der Gradient des Motormoments ist kleiner als ein vorgegebener Motormomentgradientenschwellenwert.

Die Fahrpedalstellung wird dabei mit einem zusätzlichen Sensor erfasst, oder innerhalb des Motorsteuergerätes anhand eines Motormodells ermittelt an den Fahrdynamikregler übertragen, die Motordrehzahl wird wie auch das Motormoment von dem Motorsteuergerät bereitgestellt, die Fahrzeuggeschwindigkeit sowie die Fahrzeugbeschleunigung werden, wie zuvor beschrieben, innerhalb des Fahrdynamikreglers bestimmt, die Gierrate wird mittels des Gierratensensors erfasst und der in dem Getriebe eingelegte Gang wird mittels eines Sensors erfasst oder von einer Getriebesteuerung bereitgestellt. Die genannten Gradienten verschiedener Größen werden innerhalb der Berechnungseinheit aus dem zeitlichen Verlauf der entsprechenden Größen ermittelt.

Die Zeitdauer, während derer alle vorgesehenen Lernbedingungen fortwährend erfüllt sind, wird als Lernzyklus bezeichnet. Innerhalb eines Lernzyklus' wird fortwährend bzw. einmal in jedem Taktschritt des getaktet arbeitenden Fahrdynamikreglers ein momentaner Schätzwert für die Fahrzeugmasse anhand von Gleichung 2 in der Berechnungseinheit berechnet. Die Taktdauer (Loopzeit) beträgt beispielsweise 10 ms.

Vorzugsweise wird dann ein Mittelwert der ermittelten Schätzwerte der Fahrzeugmasse berechnet. Anschließend wird zur Aktualisierung des für die Beeinflussung des Fahrdynamikregelverfahrens maßgeblichen Wertes der Fahrzeugmasse ein gewichteter Mittelwert aus diesem Wert und dem bisherigen Wert der Fahrzeugmasse bestimmt, der im ersten Lernzyklus dem Startwert entspricht. Anders ausgedrückt erfolgt die Aktualisierung, indem ein gewichteter Mittelwert aus dem bisherigen maßgeblichen Wert und den innerhalb des Lernzyklus berechneten Schätzwerten der Fahrzeugmassen gebildet wird, wobei letztere alle mit demselben Gewicht in den Mittelwert eingehen. Die Gewichtungsfaktoren werden in Fahrversuchen bestimmt. Vorteilhaft kann es dabei insbesondere vorgesehen sein, bei einer höheren Anzahl von absolvierten Lernzyklen die innerhalb eines Lernzyklus bestimmten Schätzwerte der Fahrzeugmasse mit einem höheren Gewicht in den Mittelwert eingehen.

Als besonders vorteilhaft hat sich dabei ein Verfahren herausgestellt, bei dem eine erste Aktualisierung des Fahrzeugmassenwertes nach den ersten 100 Loops eines Lernzyklus' erfolgt und weitere Aktualisierungen nach jeweils weiteren 50 Loops des Lernzyklus'.

Weiterhin erfolgt eine Mittelwertbildung aus den verschiedenen momentanen Schätzwerten, die innerhalb eines Lernzyklus berechnet werden, vorzugsweise erst nach einer Filterung der Werte. Dabei ist es vorgesehen, dass die Werte auf ein bestimmtes Band, d.h. einen vorgegebenen Minimal- bzw. Maximalwert begrenzt werden. Als Minimalwert kann dabei beispielsweise das Leergewicht des Fahrzeugs vorgegeben werden. Der Maximalwert kann etwa um einen bestimmten Betrag über dem zulässigen Gesamtgewicht des Fahrzeugs liegen. Nach der Begrenzung wird der Wert vorzugsweise in einem PT1-Glied, d.h. einem Tiefpassfilter, gefiltert. Der so gefilterte Wert geht dann in den zu bildenden Mittelwert ein.

Sobald eine der vorgesehenen Lernbedingungen nicht mehr erfüllt ist, ist ein Lernzyklus abgeschlossen und ein Zähler wird - ausgehend von einem Wert von null beim Starten des Fahrzeugs - um den Wert 1 inkrementiert.

Es hat sich als besonders vorteilhaft erwiesen, den Wert des Zählers für eine Anpassung der Lernbedingungen heranzuziehen, so dass diese mit steigender Anzahl der Lernzyklen verändert und insbesondere enger gefasst werden können. Auf diese Weise wird erreicht, dass die Fahrzeugmasse mit zunehmender Fahrdauer genauer bestimmt werden kann. Vorzugsweise ist dabei insbesondere eine Anpassung der Lernbedingungen h, i und j vorgesehen, wobei der Beschleunigungsschwellenwert (Bedingung h) stufenweise verringert und der Gierratenschwellenwert (Bedingung i) sowie der Motormomentgradientenschwellenwert (Bedingung j) in gleichen Stufen erhöht werden. Es sind dabei vorzugsweise erste Schwellenwerte vorgegeben, die für die ersten beiden Lernzyklen (Zählerwert ist 0 oder 1) zugrunde gelegt werden, zweite Schwellenwerte, die innerhalb der Lernzyklen drei bis elf (Zählerwerte 2 bis 10) herangezogen werden, sowie dritte Schwellenwerte für die weiteren Lernzyklen (Zählerwerte größer 10).

Ausgehend von dem Startwert bei einem Start des Fahrzeugs wird der maßgebliche Wert für die Fahrzeugmasse innerhalb der Lernzyklen, die während der Fahrt durchlaufen werden, fortlaufend in der zuvor beschriebenen Weise aktualisiert. Der jeweils aktuelle Wert der Fahrzeugmasse wird dabei zur Anpassung des Aktivierungsschwellenwertes für das Regelverfahren zur Kippstabilisierung des Fahrzeugs herangezogen. Die Anpassung kann kontinuierlich erfolgen, wobei der Aktivierungsschwellenwert in Abhängigkeit von dem aktuellen Fahrzeugmassenwert beispielsweise anhand einer vorgegebenen Kennlinie bestimmt wird. Gleichfalls kann jedoch auch eine stufenweise Anpassung erfolgen, für die mehrere Bereiche für den Fahrzeugmassenwert vorgegeben werden, denen jeweils ein Aktivierungsschwellenwert zugeordnet ist.

Neben der Bestimmung des Beladungszustands des Fahrzeugs anhand der Fahrzeugmasse ist es zudem vorgesehen, den Beladungszustand anhand der so genannten charakteristischen Geschwindigkeit des Fahrzeugs zu ermitteln. Deren Quadrat ist dabei gegeben durch

$$v_{ch}^2 = \frac{d\psi/dt \cdot l \cdot v^2}{v \cdot \delta - d\psi/dt \cdot l} \qquad (4)$$

Dabei bedeuten:

$v_{ch}$: Charakteristische Geschwindigkeit
$d\psi/dt$ : Gierrate des Fahrzeugs
l: Radstand des Fahrzeugs
δ: Lenkwinkel

Die charakteristische Geschwindigkeit eines Fahrzeugs wird insbesondere durch sein Eigenlenkverhalten beeinflusst, das sich seinerseits in Abhängigkeit von dem Beladungszustand des Fahrzeugs verändert. Insbesondere wurde festgestellt, dass das Fahrzeug mit steigender Fahrzeugmasse und/oder einem sich nach oben verschiebenden Fahrzeugschwerpunkt ein stärker untersteuerndes Verhalten aufweist. Die charakteristische Geschwindigkeit bzw. deren Quadrat wird infolgedessen kleiner.

Bei einer sich verringernden charakteristischen Geschwindigkeit kann somit darauf geschlossen werden, dass sich die Kippstabilität aufgrund einer Erhöhung der Fahrzeugmasse und/oder aufgrund einer Verschiebung des Fahrzeugschwerpunkts nach oben verringert, wobei sich eine derartige Verschiebung des Fahrzeugschwerpunktes in aller Regel infolge einer zusätzlichen Beladung des Fahrzeugs ergibt.

Anhand der Gleichung 4 wird die charakteristische Fahrzeuggeschwindigkeit dynamisch in der Berechnungseinheit bestimmt, wobei die erforderlichen Größen, Ausnahme des konstanten Radstandes der in einem Speicher der Berechnungseinheit gespeichert ist, mittels der Sensoren erfasst werden. Die Auswertung der Gleichung 4 erfolgt während Kurvenfahrten in vorgegebenen Fahrsituationen, die beispielsweise anhand vorgegebener Werte des Lenkwinkels und der Gierrate des Fahrzeugs festgestellt werden. Es kann dabei insbesondere vorgesehen sein, dass der Wert der charakteristischen Geschwindigkeit durch einen Lernalgorithmus ermittelt wird, wobei in mehreren derartigen Fahrsituationen momentane Werte für die charakteristische Geschwindigkeit bestimmt werden, aus denen ein Mittelwert gebildet wird. Der Mittelwert kann jeweils beim Auftreten der vorgegebenen Fahrsituationen aktualisiert werden.

Ist der dynamisch bestimmte Wert der charakteristischen Fahrzeuggeschwindigkeit geringer als der Wert im Leerzustand des Fahrzeugs, wird davon ausgegangen, dass die Kippstabilität aufgrund einer zusätzlichen Beladung des Fahrzeugs verringert ist.

Der dynamisch bestimmte Wert der charakteristischen Geschwindigkeit wird gleichfalls zur Anpassung von Reglerparametern herangezogen, wobei vorzugsweise der Aktivierungsschwellenwert für das Regelverfahren zur Kippstabilisierung verändert wird. Die Anpassung kann kontinuierlich erfolgen, wobei der Aktivierungsschwellenwert in Abhängigkeit von dem Wert der charakteristischen Fahrzeuggeschwindigkeit beispielsweise anhand einer vorgegebenen Kennlinie bestimmt wird, die zuvor in Fahrversuchen ermittelt worden ist. Gleichfalls kann auch eine stufenweise Anpassung erfolgen, für die mehrere Bereiche für den Fahrzeugmassenwert vorgegeben werden, denen jeweils ein Aktivierungsschwellenwert zugeordnet ist.

Wie bereits erwähnt kann es auch vorgesehen sein, dass innerhalb der Berechnungseinheit oder innerhalb der Regeleinheit eine Beladungszustandsgröße aus der Fahrzeugmasse und der charakteristischen Geschwindigkeit ermittelt werden, die zur Anpassung des Regelverfahrens innerhalb der Regeleinheit herangezogen wird.

## Patentansprüche

1.   Verfahren zum Stabilisieren eines Fahrzeugs bei dem anhand eines Regelverfahrens Stellgrößen zur Ansteuerung wenigstens eines Aktuators ermittelt werden, mit dem das Fahrverhalten des Fahrzeugs beeinflusst werden kann, wobei das Regelverfahren in Abhängigkeit von einem Beladungszustand des Fahrzeugs durchgeführt wird, und der Beladungszustand des Fahrzeugs anhand einer Fahrzeugmasse, die aufgrund einer Kräftebilanz an das Fahrzeug angreifender Kräfte ermittelt wird, und/oder anhand einer charakteristischen Geschwindigkeit des Fahrzeugs bestimmt wird, wobei anhand wenigstens eines vorgegebenen Kriteriums überprüft wird, ob eine erste vorgegebene Fahrsituation vorliegt, und die Kräftebilanz ausgewertet wird, wenn festgestellt wird, dass die erste vorgegebene Fahrsituation vorliegt,
**dadurch gekennzeichnet,**
dass eine Anzahl von Lernzyklen gezählt wird, wobei ein Lernzyklus einer zusammenhängenden Zeitdauer entspricht, in der die erste vorgegebene Fahrsituation vorliegt, und das Kriterium zur Überprüfung, ob die erste vorgegebene Fahrsituation vorliegt, in Abhängigkeit von der Anzahl der Lernzyklen verändert wird.

2.   Verfahren nach Anspruch 1,
**dadurch gekennzeichnet,**
**dass** die erste vorgegebene Fahrsituation vorliegt, wenn die Fahrzeugbeschleunigung größer als ein Beschleunigungsschwellenwert ist.

**3.** Verfahren nach Anspruch 1 oder 2,
**dadurch gekennzeichnet,**
**dass** die erste vorgegebene Fahrsituation vorliegt, wenn eine Gierrate des Fahrzeugs betraglich kleiner als ein Gierratenschwellenwert ist.

**4.** Verfahren nach einem der Ansprüche 2 bis 3,
**dadurch gekennzeichnet,**
**dass** die erste vorgegebene Fahrsituation vorliegt, wenn ein Gradient eines Motormoments betraglich kleiner als ein Motormomentgradientenschwellenwert ist.

**5.** Verfahren nach einem der vorangegangenen Ansprüche,
**dadurch gekennzeichnet,**
**dass** die Fahrzeugmasse anhand eines Lernalgorithmus ermittelt wird, wobei in verschiedenen Zeitpunkten jeweils ein momentaner Schätzwert für die Fahrzeugmasse ermittelt wird, und die Fahrzeugmasse anhand einer Mittelwertbildung aus den momentanen Schätzwerten ermittelt wird.

**6.** Verfahren nach Anspruch 5,
**dadurch gekennzeichnet,**
**dass** die Fahrzeugmasse als ein gewichteter Mittelwert bestimmt wird, wobei ein in einem Zeitpunkt ermittelter momentaner Schätzwert mit einem ersten Gewicht in den Mittelwert eingeht und ein zuvor bestimmter Wert der Fahrzeugmasse mit einem zweiten Gewicht in den Mittelwert eingeht.

**7.** Verfahren nach Anspruch 6,
**dadurch gekennzeichnet,**
**dass** das zweite Gewicht größer ist als das erste Gewicht.

**8.** Verfahren nach einem der vorangegangenen Ansprüche,
**dadurch gekennzeichnet,**
**dass** das Kriterium mit steigender Anzahl von Lernzyklen enger gefasst wird.

**9.** Verfahren nach einem der vorangegangenen Ansprüche,
**dadurch gekennzeichnet,**
**dass** der Beschleunigungsschwellenwert mit steigender Anzahl von Lernzyklen vergrößert wird.

**10.** Verfahren nach einem der vorangegangenen Ansprüche,
**dadurch gekennzeichnet,**
**dass** der Gierratenschwellenwert mit steigender Anzahl von Lernzyklen verringert wird.

**11.** Verfahren nach einem der vorangegangenen Ansprüche,
**dadurch gekennzeichnet,**
**dass** der Motormomentgradientenschwellenwert mit steigender Anzahl von Lernzyklen verringert wird.

**12.** Verfahren nach Anspruch 6 oder 7,
**dadurch gekennzeichnet,**
**dass** ein Verhältnis zwischen dem ersten Gewicht und dem zweiten Gewicht in Abhängigkeit von der Anzahl der Lernzyklen ermittelt wird.

**13.** Verfahren nach einem der vorangegangenen Ansprüche,
**dadurch gekennzeichnet,**
**dass** überprüft wird, ob eine zweite vorgegebene Fahrsituation vorliegt, und dass die charakteristische Geschwindigkeit ermittelt wird, wenn festgestellt wird, dass die zweite vorgegebene Fahrsituation vorliegt.

**14.** Verfahren nach Anspruch 13,
**dadurch gekennzeichnet,**
**dass** es sich bei der zweiten Fahrsituation um eine Kurvenfahrt handelt.

**15.** Verfahren nach einem der vorangegangenen Ansprüche,
**dadurch gekennzeichnet,**

**dass** das Regelverfahren durchgeführt wird, wenn der Wert einer Fahrzustandsgröße des Fahrzeugs betraglich größer ist als ein Aktivierungsschwellenwert,wobei der Aktivierungsschwellenwert in Abhängigkeit von dem Beladungszustand des Fahrzeugs ermittelt wird.

**16.** Verfahren nach Anspruch 15,
**dadurch gekennzeichnet,**
**dass** der Aktivierungsschwellenwert mit steigender Fahrzeugmasse verringert wird.

**17.** Verfahren nach Anspruch 15 oder 16,
**dadurch gekennzeichnet,**
**dass** der Aktivierungsschwellenwert mit sich verringernder charakteristischer Geschwindigkeit verringert wird.

**18.** Verfahren nach einem der Ansprüche 15 bis 17,
**dadurch gekennzeichnet,**
**dass** es sich bei der Fahrzustandsgröße um eine Querbeschleunigung des Fahrzeugs handelt.

**19.** Fahrdynamikregelsystem zum Stabilisieren eines Fahrzeugs, umfassend eine Regeleinheit, in der Stellgrößen zur Ansteuerung wenigstens eines Aktuators ermittelbar sind, mit dem das Fahrverhalten des Fahrzeugs beeinflussbar ist, wobei
die Stellgrößen in Abhängigkeit von einem Beladungszustand des Fahrzeugs ermittelbar sind, wobei der Beladungszustand des Fahrzeugs anhand einer Fahrzeugmasse, die aufgrund einer Kräftebilanz an das Fahrzeug angreifender Kräfte ermittelbar ist, und/oder anhand einer charakteristischen Geschwindigkeit des Fahrzeugs bestimmbar ist, **dadurch gekennzeichnet, dass** die Regeleinheit derart ausgebildet ist, dass eine Anzahl von lernzyklen gezählt wird, wobei ein lernzyklus einer zusammenhängenden Zeitdaver entspricht, in der die erste vorgegebene Fahrsituation vorliegt, und das Kriterum zur Überprüfung, ob die erste vorgegebene Fahrsituation vorliegt, in Abhängigkeit von der Anzahl der Lernzyklen verändert wird.

**Claims**

**1.** Method for stabilizing a vehicle, in which manipulated variables for actuating at least one actuator, with which the driving behaviour of the vehicle can be influenced, are determined by means of a control method, wherein the control method is carried out as a function of a load state of the vehicle, and the load state of the vehicle is determined on the basis of a vehicle mass, which is acquired on the basis of a force balance of forces acting on the vehicle, and/or is determined on the basis of a characteristic speed of the vehicle, wherein on the basis of at least one predefined criterion it is checked whether a first predefined driving situation is present, and the force balance is evaluated if it is found that the first predefined driving situation is present,
**characterized**
**in that** a number of learning cycles is counted, wherein a learning cycle corresponds to a coherent time period in which the first predefined driving situation is present, and the criterion for checking whether the first predefined driving situation is present is changed as a function of the number of learning cycles.

**2.** Method according to Claim 1,
**characterized**
**in that** the first predefined driving situation is present if the acceleration of the vehicle is higher than an acceleration threshold value.

**3.** Method according to Claim 1 or 2,
**characterized**
**in that** the first predefined driving situation is present if a yaw rate of the vehicle is smaller in absolute value than a yaw rate threshold value.

**4.** Method according to one of Claims 2 to 3, **characterized**
**in that** the first predefined driving situation is present if a gradient of an engine torque is smaller in absolute value than an engine torque gradient threshold value.

**5.** Method according to one of the preceding claims, **characterized**
**in that** the vehicle mass is determined on the basis of a learning algorithm, wherein an instantaneous estimated value for the vehicle mass is respectively determined at various times, and the vehicle mass is determined on the basis of formation of mean values from the instantaneous estimated values.

6. Method according to Claim 5,
**characterized**
**in that** the vehicle mass is determined as a weighted mean value, wherein an instantaneous estimated value, which is determined at a time and has a first weighting, is included in the mean value, and a previously determined value of the vehicle mass, which has a second weighting, is included in the mean value.

7. Method according to Claim 6,
**characterized**
**in that** the second weighting is greater than the first weighting.

8. Method according to one of the preceding claims, **characterized**
**in that** the criterion is now tighter as the number of learning cycles increases.

9. Method according to one of the preceding claims, **characterized**
**in that** the acceleration threshold value is increased as the number of learning cycles increases.

10. Method according to one of the preceding claims, **characterized**
**in that** the yaw rate threshold value is reduced as the number of learning cycles increases.

11. Method according to one of the preceding claims, **characterized**
**in that** the engine torque gradient threshold value is reduced as the number of learning cycles increases.

12. Method according to Claim 6 or 7, **characterized**
**in that** a ratio is determined between the first weighting and the second weighting as a function of the number of learning cycles.

13. Method according to one of the preceding claims, **characterized**
**in that** it is checked whether a second predefined driving situation is present, and in that the characteristic speed is determined if it is detected that the second predefined driving situation is present.

14. Method according to Claim 13, **characterized**
**in that** the second driving situation is cornering.

15. Method according to one of the preceding claims, **characterized**
**in that** the control method is carried out if the value of a driving state variable of the vehicle is larger in absolute value than an activation threshold value, wherein the activation threshold value is determined as a function of the load state of the vehicle.

16. Method according to Claim 15, **characterized**
**in that** the activation threshold value is reduced as the vehicle mass increases.

17. Method according to Claim 15 or 16,
**characterized**
**in that** the activation threshold value is decreased as the characteristic speed decreases.

18. Method according to one of Claims 15 to 17, **characterized**
**in that** the driving state variable is a lateral acceleration of the vehicle.

19. Vehicle dynamics control system for stabilizing a vehicle, comprising a control unit in which manipulated variables for actuating at least one actuator, with which the driving behaviour of the vehicle can be influenced, can be determined, wherein the manipulated variables can be determined as a function of a load state of the vehicle, wherein the load state of the vehicle can be determined on the basis of a vehicle mass, which can be acquired on the basis of a force balance of forces acting on the vehicle, and/or can be determined on the basis of a characteristic speed of the vehicle, **characterized**
**in that** the control unit is embodied in such a way that a number of learning cycles is counted, wherein one learning cycle corresponds to a coherent time period in which the first predefined driving situation is present, and the criterion for checking whether the first predefined driving situation is present is changed as a function of the number of learning cycles.

## Revendications

1. Procédé de stabilisation d'un véhicule, dans lequel des grandeurs de réglage servant à commander au moins un actionneur sont déterminées à l'aide d'un procédé de régulation,
l'actionneur permettant d'agir sur le comportement de roulage du véhicule,
le procédé de régulation étant exécuté en fonction d'un état de chargement du véhicule et l'état de chargement du véhicule étant déterminé à l'aide d'une masse du véhicule déterminée sur base des forces agissant sur le véhicule en fonction d'un bilan de force et/ou étant déterminée à l'aide d'une vitesse caractéristique du véhicule,
le procédé vérifiant à l'aide d'au moins un critère prédéterminé si une première situation prédéterminée de roulage prévaut et le bilan de force étant évalué s'il est constaté que la première situation prédéterminée de roulage prévaut, **caractérisé en ce que**
un nombre de cycles d'apprentissage est compté, un cycle d'apprentissage correspondant à une durée continue au cours de laquelle la première situation prédéterminée de roulage prévaut, et
**en ce que** le critère de vérification de la présence d'une première situation de roulage prédéterminée est modifié en fonction du nombre de cycles d'apprentissage.

2. Procédé selon la revendication 1, **caractérisé en ce que** la première situation prédéterminée de roulage prévaut si l'accélération du véhicule est supérieure à une valeur de seuil d'accélération.

3. Procédé selon les revendications 1 ou 2, **caractérisé en ce que** la première situation prédéterminée de roulage prévaut si une vitesse de lacet du véhicule a un niveau inférieur à une valeur de seuil de vitesse de lacet.

4. Procédé selon l'une des revendications 2 à 3, **caractérisé en ce que** la première situation prédéterminée de roulage prévaut si un gradient d'un couple moteur a un niveau inférieur à une valeur de seuil de gradient de couple moteur.

5. Procédé selon l'une des revendications précédentes, **caractérisé en ce que** la masse du véhicule est déterminée en fonction d'un algorithme d'apprentissage dans lequel une valeur estimée instantanée de la masse du véhicule est déterminée à différents instants, la masse du véhicule étant déterminée par formation d'une valeur moyenne des valeurs estimées instantanées.

6. Procédé selon la revendication 5, **caractérisé en ce que** la masse du véhicule est déterminée en tant que valeur moyenne pondérée, une valeur estimée instantanée de la masse du véhicule déterminée à un instant intervenant dans la valeur moyenne avec une première pondération et une valeur de la masse du véhicule définie précédemment intervenant dans la valeur moyenne avec une deuxième pondération.

7. Procédé selon la revendication 6, **caractérisé en ce que** la deuxième pondération est supérieure à la première pondération.

8. Procédé selon l'une des revendications précédentes, **caractérisé en ce que** le critère est plus strict lorsque le nombre de cycles d'apprentissage augmente.

9. Procédé selon l'une des revendications précédentes, **caractérisé en ce que** la valeur de seuil d'accélération est augmentée lorsque le nombre de cycles d'apprentissage augmente.

10. Procédé selon l'une des revendications précédentes, **caractérisé en ce que** la valeur de seuil de vitesse de lacet est diminuée lorsque le nombre de cycles d'apprentissage augmente.

11. Procédé selon l'une des revendications précédentes, **caractérisé en ce que** la valeur de seuil du gradient de couple moteur est diminuée lorsque le nombre de cycles d'apprentissage augmente.

12. Procédé selon les revendications 6 ou 7, **caractérisé en ce que** le rapport entre la première pondération et la deuxième pondération est déterminé en fonction du nombre des cycles d'apprentissage.

**13.** Procédé selon l'une des revendications précédentes, **caractérisé en ce qu'**il vérifie si une deuxième situation prédéterminée de roulage prévaut et **en ce que** la vitesse caractéristique est déterminée lorsqu'il est constaté que la deuxième situation prédéterminée de roulage prévaut.

**14.** Procédé selon la revendication 13, **caractérisé en ce que** la deuxième situation de roulage est un roulage en virage.

**15.** Procédé selon l'une des revendications précédentes, **caractérisé en ce que** le procédé de régulation est exécuté lorsque la valeur d'une grandeur d'état de roulage du véhicule a un niveau supérieur à une valeur de seuil d'activation et **en ce que** la valeur de seuil d'activation est déterminée en fonction de l'état de chargement du véhicule.

**16.** Procédé selon la revendication 15, **caractérisé en ce que** la valeur de seuil d'activation est diminuée lorsque la masse du véhicule augmente.

**17.** Procédé selon les revendications 15 ou 16, **caractérisé en ce que** la valeur de seuil d'activation est diminuée lorsque la vitesse caractéristique diminue.

**18.** Procédé selon l'une des revendications 15 à 17, **caractérisé en ce que** la grandeur d'état du véhicule est une accélération transversale du véhicule.

**19.** Système de régulation de la dynamique de roulage destiné à stabiliser un véhicule, comprenant une unité de régulation dans laquelle des grandeurs de réglage qui commandent au moins un actionneur sont déterminées, l'actionneur pouvant agir sur le comportement de roulage du véhicule,
les grandeurs de réglage pouvant être déterminées en fonction d'un état de chargement du véhicule, l'état de chargement du véhicule étant défini à l'aide d'une masse du véhicule qui peut être déterminée sur base d'un bilan de force des forces qui agissent sur le véhicule et/ou à l'aide d'une vitesse caractéristique du véhicule, **caractérisé en ce que**
l'unité de régulation est configurée de manière à compter un nombre de cycles d'apprentissage, un cycle d'apprentissage correspondant à une durée continue au cours de laquelle la première situation prédéterminée de roulage prévaut, et
**en ce que** le critère de vérification de la présence de la première situation prédéterminée de roulage est modifié en fonction du nombre des cycles d'apprentissage.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19830189 A1